# EUROPEAN PATENT APPLICATION

(11) **EP 3 588 651 A1**
(43) Date of publication of application: **01.01.2020**
(21) Application number: 19179277.9
(22) Date of filing: 10.06.2019
(51) Int. Cl.: H01M 8/0612, H01M 8/0637, H01M 8/04007, H01M 8/0432, C01B 3/38, H01M 8/0438, B01J 8/04

(54) **REFORMER AND FUEL CELL SYSTEM HAVING THE SAME**

(30) Priority: 29.06.2018 KR 20180075106
(71) Applicant: Kyungdong Navien Co., Ltd., Pyeongtaek-si, Gyeonggi-do 17704 (KR)
(72) Inventor: Park, Se Jin, 08501 Geumcheon-Gu (KR); Yi, Yong, 08501 Geumcheon-Gu (KR); Shin, Seock Jae, 08501 Geumcheon-Gu (KR); Kim, Min Soo, 08501 Geumcheon-Gu (KR)
(74) Representative: Beck Greener LLP

(57) **Abstract**

A fuel cell system (100) includes a reformer (200) generating a reformed gas from a fuel gas supplied from a fuel supplier (10) by a reforming reaction to discharge a mixed gas of the fuel gas unreacted and the reformed gas, and including a catalyst device (220) including a catalyst used for the reforming reaction and a fuel cell stack (300) including an anode (310) receiving the reformed gas generated at the reformer, a cathode (320) receiving oxygen, and a reforming device (330) generating a reformed gas from the unreacted fuel gas of the mixed gas supplied from the reformer by a reforming reaction to be provided to the anode and being installed integrally with or adjacent to the anode, and the reformer controls the amount of the unreacted fuel gas discharged from the reformer to increase and decrease a reforming amount inside the fuel cell stack based on a temperature of the fuel cell stack.

## Description

The present disclosure relates to a reformer and a fuel cell system having the same, and more particularly, to a reformer capable of adjusting an internal temperature of a fuel cell stack and a fuel cell system having the same.

A fuel cell is a device for converting chemical energy of fuel into electrical energy. The fuel cell is a power generation system which produces electricity by electrochemically reacting hydrogen in a reformed gas obtained by reforming the fuel such as a natural gas and oxygen in air, at an anode and a cathode of a stack.

Because a reformer, a fuel cell stack, a burner, a heat exchanger, and the like which are components of a fuel cell system, operate at a high temperature, the reformer, the fuel cell stack, the burner, and the heat exchanger are installed in a hot box having good heat insulation to maintain an operation temperature.

An operation condition within the hot box, including the reformer and the fuel cell stack, is determined based on a design condition of the fuel cell system. After the system operation condition is fixed, it is difficult to change the operation condition of the reformer without an additional controller because the reformer and the stack operate under a constant condition.

Meanwhile, a problem, in which a temperature of the fuel cell stack increases during operation because a fuel cell reaction of the fuel cell stack is an exothermic reaction, may occur. Therefore, there is a need for a device and a method which appropriately maintain the temperature by controlling the temperature of the fuel cell stack.

Conventionally, the temperature of the fuel cell stack is adjusted by controlling a temperature of a gas introduced into the fuel cell stack, or by adding a device serving as a heat exchanger inside or outside the fuel cell stack. However, in this case, a problem is caused by the need for a cooler for cooling the fuel cell stack and a controller for controlling the cooler.

The present disclosure seeks to solve the above-mentioned problems occurring in the prior art while advantages achieved by the prior art are maintained intact.

An aspect of the present disclosure provides a reformer, in which the amount of an unreacted fuel gas discharged is adjusted to increase and decrease a reforming amount generated inside the fuel cell stack, thereby controlling an internal temperature of the fuel cell stack, and a fuel cell system having the same.

In addition, the present disclosure provides a reformer, in which a temperature of a fuel cell stack is controlled to maintain the temperature of the fuel cell stack within an appropriate range without any additional device, and a fuel cell system having the same.

The technical problems to be solved by the present inventive concept are not limited to the aforementioned problems, and any other technical problems not mentioned herein will be clearly understood from the following description by those skilled in the art to which the present disclosure pertains.

According to an aspect of the present invention, there is provided a fuel cell system comprising a reformer generating a reformed gas from a fuel gas supplied from a fuel supplier by a reforming reaction to discharge a mixed gas of the fuel gas unreacted and the reformed gas, and including a catalyst device including a catalyst used for the reforming reaction; and a fuel cell stack including an anode receiving the reformed gas generated at the reformer, a cathode receiving oxygen, and a reforming device generating a reformed gas from the unreacted fuel gas of the mixed gas supplied from the reformer by a reforming reaction to be provided to the anode and being installed integrally with or adjacent to the anode; wherein the reformer controls an amount of the unreacted fuel gas discharged from the reformer to increase and decrease a reforming amount inside the fuel cell stack based on a temperature of the fuel cell stack.

In some embodiments, the reformer varies an amount of the catalyst reacting in the catalyst device to control the amount of the unreacted fuel gas discharged from the reformer. In some embodiments, the reformer decrease the amount of the catalyst reacting in the catalyst device to increase the amount of the unreacted fuel gas discharged from the reformer for increasing a reforming amount of the reforming device when the temperature of the fuel cell stack is greater than or equal to a first specific temperature, and
wherein the reformer increases the amount of the catalyst reacting in the catalyst device to decrease the amount of the unreacted fuel gas discharged from the reformer for decreasing the reforming amount of the reforming device when the temperature of the fuel cell stack is less than or equal to a second specific temperature lower than the first specific temperature.

In embodiments, the reformer includes a reforming main body in which the catalyst device is accommodated; a fuel gas inlet supplying the fuel gas inside the reforming main body; and a reformed gas outlet discharging the mixed gas generated inside the reforming main body; wherein the catalyst device includes a plurality of reforming catalyst regions being arranged along a flow direction of the fuel gas introduced through the fuel gas inlet to communicate with one another; wherein the fuel gas inlet supplies the fuel gas to one of the reforming catalyst regions to vary the amount of the catalyst reacting in the catalyst device; and wherein the fuel gas supplied to one of the reforming catalyst regions flows toward the reformed gas outlet. In some of these embodiments, the fuel gas inlet includes a plurality of inlets which are disposed corresponding to the reforming catalyst regions, respectively, and selectively supply the fuel gas to each of the reforming catalyst regions.

In embodiments, the reformer includes a reforming main body in which the catalyst device is accommodated; a fuel gas inlet supplying the fuel gas inside the reforming main body; and a reformed gas outlet discharging the mixed gas generated inside the reforming main body; wherein the catalyst device includes a plurality of reforming catalyst regions being arranged along a flow direction of the fuel gas introduced through the fuel gas inlet to communicate with one another; and wherein the reformed gas outlet discharges the mixed gas from one of the reforming catalyst regions to vary an amount of the catalyst reacting in the catalyst device. In some of these embodiments, the reformed gas outlet includes a plurality of outlets which are disposed to correspond to the reforming catalyst regions, respectively, and selectively discharge the mixed gas from each of the reforming catalyst regions. Additionally or alternatively, the catalyst device includes empty space regions between the plurality of the reforming catalyst regions to mix the fuel gas introduced between the reforming catalyst regions and to control a pressure of the reformed gas generated. Additionally or alternatively, the fuel cell system further comprises a control valve disposed on a line supplying the fuel gas to the fuel gas inlet for controlling the supplying of the fuel gas to the fuel gas inlet.

According to another aspect of the present invention, there is provided a reformer, comprising a reforming main body in which a catalyst device is accommodated; a fuel gas inlet supplying a fuel gas into the reforming main body; and a reformed gas outlet generating a reformed gas from the supplied fuel gas by a reforming reaction in the reforming main body to discharge a mixed gas of the fuel gas unreacted and the reformed gas; wherein the catalyst device includes a plurality of reforming catalyst regions arranged along a flow direction of the fuel gas introduced through the fuel gas inlet to communicate with one another; wherein the fuel gas inlet supplies the fuel gas to one of the reforming catalyst regions for varying an amount of catalyst reacting in the catalyst device; and wherein the fuel gas supplied to one of the reforming catalyst regions flows toward the reformed gas outlet.

The above and other objects, features and advantages of the present disclosure will be more apparent from the following detailed description taken in conjunction with the accompanying drawings, in which:
FIG. 1 is a schematic view illustrating a fuel cell system;
FIG. 2 is another schematic view illustrating a fuel cell system;
FIG. 3A is a schematic view illustrating a general reformer;
FIG. 3B is a schematic view illustrating a reformer; and
FIG. 4 is a view illustrating an example of a reformer.

Hereinafter, preferred embodiments of the present invention will be described in detail with reference to the accompanying drawings.

First, the embodiments described below are embodiments suitable for understanding the technical characteristics of a reformer and a fuel cell system having the same of the present disclosure. However, the technical features of the present disclosure are not limited by the embodiments to which the present disclosure is applied or explained in the following embodiments, and various modifications are possible within the technical scope of the appending claims.

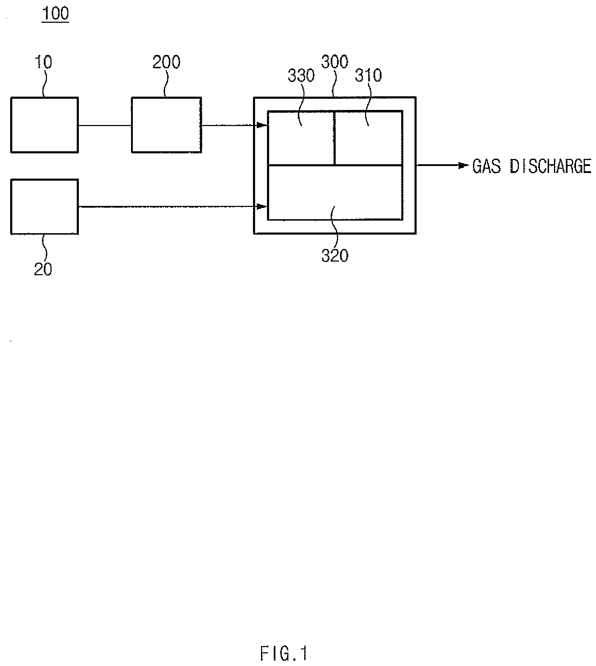

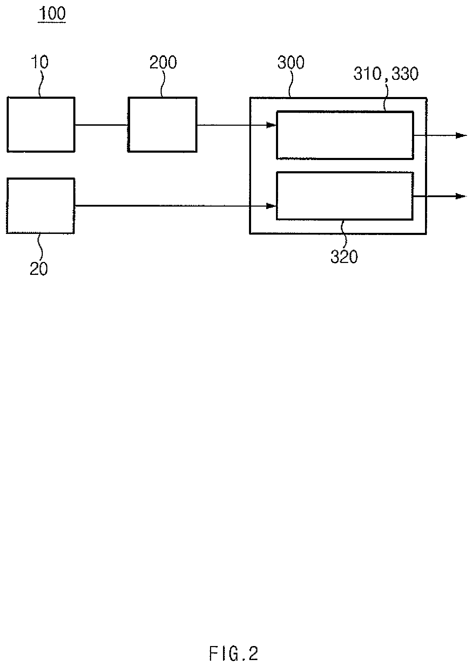

Referring to FIGS. 1 and 2, a fuel cell system 100 according to an embodiment of the present disclosure includes a reformer 200 and a fuel cell stack 300.

The reformer 200 generates a reformed gas from a fuel gas supplied from a fuel supply unit 10 by a reforming reaction and discharges a mixed gas including an unreacted fuel gas and the reformed gas. A catalyst device 220 including a catalyst used in the reforming reaction is provided. Here, the reforming reaction is an endothermic reaction, a reaction temperature of the reforming reaction is relatively high, and therefore the reforming reaction requires a high-temperature heat source.

The fuel cell stack 300 includes an anode 310, a cathode 320, and a reforming device 330, and a plurality of unit cells is stacked.

The reforming device 330 generates a reformed gas from the unreacted fuel gas in the mixed gas supplied from the reformer 200 by a reforming reaction to supply the reformed gas to the anode 310. The reforming device 330 is installed integrally with or adjacent to the anode 310. In detail, the reforming device 330 may be disposed inside the fuel cell stack 300 and may serve to generate and supply the reformed gas necessary for the anode 310. In addition, the reforming device 330 may receive the unreacted fuel gas from the reformer 200 provided outside the fuel cell stack 300 to perform the reforming reaction.

In this case, the reforming device 330 may be installed in various forms on condition that the reforming device 330 is disposed inside the fuel cell stack 300. In detail, in the embodiment illustrated in FIG. 1, the reforming device 330 may be installed adjacent to the anode 310 such that the reforming device 330 and the anode 310 exchange heat with each other. Namely, because a reaction of the anode 310 is an exothermic reaction which is a fuel cell reaction and a reaction of the reforming device 330 is an endothermic reaction which is the reforming reaction, the anode 310 and the reforming device 330 may be installed adjacent to each other to exchange heat with each other.

In addition, more preferably, in the embodiment illustrated in FIG. 2, the reforming device 330 may be integrally formed with the anode 310. In detail, the reforming device 330 and the anode 310 may be physically formed into a single device to reform methane into hydrogen and to be immediately used for a chemical reaction just after reforming. That is, an additional reforming device may be unnecessary inside the fuel cell stack 300 and internal reforming may be led in the anode 310 of the fuel cell stack 300.

A reforming level inside the fuel cell stack 300 depends on a reformed gas composition supplied from the reformer 200. Because the reforming reaction is a strong endothermic reaction, the temperature of the fuel cell stack 300 may be lowered depending on the internal reforming level of the anode 310 of the fuel cell stack 300.

The cathode 320 may receive oxygen from an air supplier 20. The air supplier 20 may include an air supply source, a blower, and the like. The anode 310 may receive the reformed gas generated in the reformer 200 and the reforming device 330.

The amount of the unreacted fuel gas discharged from the reformer 200 is adjusted to control reforming amount inside the fuel cell stack 300 in consideration of the temperature of the fuel cell stack 300.

In detail, a rate of change from the fuel gas supplied to the reformer 200 to the reformed gas in the reformer 200 is defined as a conversion rate. When the conversion rate of the reformed gas is decreased, the amount of unreacted fuel gas discharged from the reformer 200 may be increased. When the conversion rate of the reformed gas is increased, the amount of unreacted fuel gas discharged from the reformer 200 may be decreased. Thus, the reforming amount inside the fuel cell stack 300 may increase and decrease using the conversion rate and the amount of the unreacted fuel gas. Here, when the anode 310 and the reforming device 330 are integrally formed with each other, the reforming amount inside the fuel cell stack 300 may be the reforming amount of the anode 310 and when the anode 310 and the reforming device 330 are adjacent to each other, the reforming amount inside the fuel cell stack 300 may be the reforming amount of the reforming device 330.

For example, when the temperature of the fuel cell stack 300 is increased due to progress of the fuel cell reaction, which is an exothermic reaction, the amount of the unreacted fuel gas may be increased as the conversion rate of the reformer 200 is decreased to increase the reforming amount inside the fuel cell stack 300. Here, the amount of heat absorption in the anode 310 may be increased due to increase of the reforming reaction inside the fuel cell stack 300, thereby decreasing the temperature of the fuel cell stack 300.

On the contrary, when the temperature of the fuel cell stack 300 is decreased, the amount of the unreacted fuel gas may be decreased as the conversion rate of the reformer 200 is increased to decrease the reforming amount inside the fuel cell stack 300. Here, the reforming reaction inside the fuel cell stack 300 is decreased and the fuel cell reaction, which is an exothermic reaction, progresses actively, thereby increasing the temperature of the fuel cell stack 300.

In this way, the convention rate may be controlled to allow the reformer 200 to adjust the amount of the unreacted fuel gas discharged from the reformer 200. Thus, the reforming amount inside the fuel cell stack 300 may increase and decrease, thereby controlling the temperature inside fuel cell stack 300.

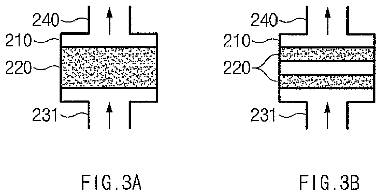

FIG. 3A illustrates a general reformer. FIG. 3B is a schematic view illustrating a reformer according to the present disclosure. Referring to FIG. 3A, the amount of the catalyst of the reformer is generally determined at the designing and manufacturing stages. After completion of the production, it is impossible to change the amount of the catalyst of the reformer at the system operation stage or to change the amount of the catalyst involved in the reforming reaction. Thus, a method of changing the temperature of the reforming device is almost unique to change the reforming conversion rate. To this end, as illustrated in FIG. 3B, the reformer according to present disclosure may improve the catalyst device to change the amount of catalyst involved in the reforming reaction.

Therefore, the present disclosure may control the temperature of the fuel cell stack 300 without addition or removal of a separate device while maintaining an operation state of the fuel cell system 100 to maintain the temperature of the fuel cell stack 300 within an appropriate range.

In detail, the reformer 200 may vary the amount of the catalyst which reacts in the catalyst device 220 to control the amount of the unreacted fuel gas discharged from the reformer 200.

In general, the amount of the fuel gas supplied to the reformer 200 is kept constant during a rated operation. Thus, it is difficult to change the temperature of the reformer 200 while maintaining the operating condition of the fuel cell system 100 without an additional controller. Thus, the present disclosure may vary the amount of the catalyst which reacts with the supplied fuel gas in the reformer 200 to control the conversion rate.

In detail, when the temperature of the fuel cell stack 300 is equal to or higher than a first specific temperature, the reformer 200 may decrease the amount of the catalyst reacting in the catalyst device 220 to increase the unreacted fuel gas discharged from the reformer 200. Thus, the reforming amount inside the fuel cell stack 300 may be increased to decrease the temperature of the fuel cell stack 300. In addition, when the temperature of the fuel cell stack 300 is equal to or lower than a second specific temperature lower than the first specific temperature, the reformer 200 may increase the amount of the catalyst reacting in the catalyst device 220 to decrease the unreacted fuel gas discharged from the reformer 200. Thus, the reforming amount inside the fuel cell stack 300 may be decreased to lower the amount of the heat absorption.

Meanwhile, a method of controlling the amount of the unreacted fuel gas discharged from the reformer 200 is not limited to varying the amount of the catalyst which reacts in the catalyst device 220 and various methods may be applied. For example, the amount of unreacted fuel gas discharged may be adjusted by controlling the temperature of the reforming reaction in the reformer 200.

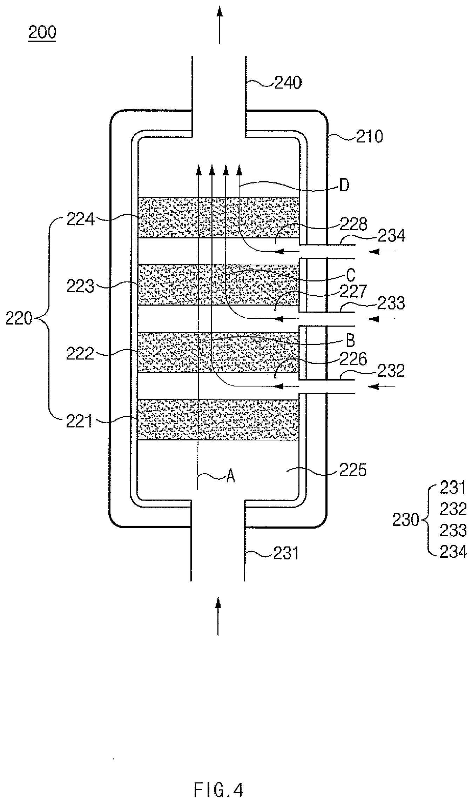

In detail, referring to FIG. 4, the reformer 200 includes a reforming main body 210, a fuel gas inlet 230, and a reformed gas outlet 240.

The reforming main body 210 in which the catalyst device 220 is accommodated may react with the introduced fuel gas.

The fuel gas inlet 230 may supply the fuel gas into the reforming main body 210. In addition, the reformed gas outlet 240 may allow the mixed gas generated inside the reforming main body 210 to be discharged.

Here, the catalyst device 220 may include at least two or more reforming catalyst regions 221, 222, 223, and 224, which are arranged along a flow direction of the fuel gas flowing through the fuel gas inlet 230 and communicate with one another. In detail, the catalyst device 220 is divided into a plurality of reforming catalyst regions 221, 222, 223, and 224. The plurality of reforming catalyst regions 221, 222, 223, and 224 may be spaced apart from one another by a specific distance and may be arranged in a direction from the fuel gas inlet 230 toward the reformed gas outlet 240. The plurality of reforming catalyst regions 221, 222, 223, and 224 may be provided to communicate with one another, and thus the supplied fuel gas may flow through the plurality of reforming catalyst regions 221, 222, 223, and 224.

The fuel gas inlet 230 may provide the fuel gas to any one of the reforming catalyst regions 221, 222, 223, and 224 through a plurality of inlets 231, 232, 233, and 234 to vary the amount of the catalyst, which reacts in the catalyst device 220. In addition, the fuel gas provided to any one of the reforming catalyst regions 221, 222, 223, and 224 may flow toward the reformed gas outlet 240.

The fuel gas inlet 230 may include the plurality of inlets 231, 232, 233, and 234. The plurality of inlets 231, 232, 233, and 234 may be disposed corresponding to each of the reforming catalyst regions 221, 222, 223, and 224 to selectively introduce the fuel gas into each of the reforming catalyst regions 221, 222, 223, and 224.

In detail, an interior of the reformer 200 may be divided into a plurality of spaces along the flow direction of the fuel gas and the reforming catalyst regions 221, 222, 223, and 224 and empty space regions 225, 226, 227, and 228 may be provided at the plurality of spaces, respectively. The empty space regions 225, 226, 227, and 228 may supply the fuel gas which is a reactive gas, may uniformly diffuse the fuel gas into the reforming catalyst regions 221, 222, 223, and 224, and may control a pressure of the reforming gas supplied in the entire catalyst device 220. In addition, the empty space regions 225, 226, 227, and 228 may also function to mix the introduced fuel gas. The plurality of inlets 231, 232, 233 and 234 may be formed to provide the fuel gas into the empty space regions 225, 226, 227, and 228, and the fuel gas provided into the empty space regions 225, 226, 227, and 228 may perform the reforming reaction while passing through the reforming catalyst regions 221, 222, 223, and 224 which correspond to the empty space regions 225, 226, 227, and 228, respectively, and the reforming catalyst regions located below the corresponding reforming catalyst regions 221, 222, 223, and 224, respectively.

For example, the fuel gas provided into the inlet 231 which is disposed at the most upper side may pass through the reforming catalyst region 221 which corresponds to the inlet 231 as well as the reforming catalyst regions 222, 223, and 224 which are disposed below the reforming catalyst region 221 to perform the reforming reaction (see a flow A of FIG. 4). Therefore, when the fuel is provided into the inlet 231 disposed at the upper side, the amount of the catalyst involved in the reforming reaction may be maximized to perform maximum conversion rate operation in the reformer 200.

In addition, the fuel gas provided into the inlet 232 which is in the second place may pass through the reforming catalyst region 222 which corresponds to the inlet 232 and the reforming catalyst regions 223 and 224 which are disposed below the inlet 232 to perform the reforming reaction (see a flow B of FIG. 4). Thus, the amount of the catalyst involved in the reforming reaction may be decreased compared with the case where the fuel gas is provided into the inlet 231, which is disposed at the most upper side. In addition, the fuel gas provided into the inlet 233 which is in the third place may pass through the reforming catalyst region 233 corresponding to the inlet 233 and the reforming catalyst region 234 disposed below the reforming catalyst region 233 to perform the reforming reaction (see a flow C of FIG. 4). Further, the fuel gas provided into the inlet 234 disposed at the most lower side may pass through the reforming catalyst region 234 which corresponds to the inlet 234 to perform the reforming reaction (see a flow D of FIG. 4).

Therefore, the fuel gas may be provided to all inlets 231, 232, 233, and 234 including the inlet 231 disposed at the most upper side to maximize the reformed gas conversion rate of the reformer 200, and the fuel gas may be provided only to the inlet 234 disposed at the most lower side to minimize the reformed gas conversion rate.

In this case, the total amount of the fuel gas to be supplied to the plurality of inlets 231, 232, 233, and 234 is equal to the total amount of the supplied fuel gas to be supplied to the reformer 200. That is, the reformer 200 may change only the amount of the catalyst supplied to the reforming reaction while keeping the amount of the fuel gas supplied to the reformer 200 constant due to this kind of structure.

Meanwhile, although not shown, the reformer 200 may discharge the mixed gas from any one of the reforming catalyst regions 221, 222, 223, and 224 to vary the amount of the catalyst which reacts in the catalyst device 220. In detail, the reformed gas outlet 240 may include a plurality of outlets (not shown) which are respectively disposed corresponding to the reforming catalyst regions 221, 222, 223, and 224 to selectively discharge the mixed gas from each of the reforming catalyst regions 221, 222, 223, and 224.

In detail, the fuel gas supplied to the fuel gas inlet 230 may pass through each of the reforming catalyst regions 221, 222, 223, and 224 to perform the reforming reaction and may be selectively discharged through the outlets which correspond to the reforming catalyst regions 221, 222, 223, and 224, respectively. Referring to FIG. 4, reference numerals 232, 233, 234, and 240 of FIG. 4 serve as a plurality of outlets to selectively discharge the mixed gas.

In this case, to maximize the reformed gas conversion rate of the reformer 200, the mixed gas may be discharged to all outlets (not shown) including the outlet disposed at the most lower side. Further, to minimize the conversion rate, the mixed gas may be discharged only to the outlet disposed at the most upper side. Accordingly, the reformer 200 may vary only the amount of the catalyst involved in the reforming reaction while keeping the amount of the supplied fuel gas constant.

Meanwhile, the present disclosure may further include a control valve (not shown) disposed on a line for supplying the fuel gas to the fuel gas inlet 230. In detail, the control valve may control the supply of the fuel gas to the fuel gas inlet 230.

Here, the control valve may be installed in a low temperature region. The low temperature region may be, for example, a region where components, such as a pump, a valve, a control board, and the like, operating at room temperature, are disposed. Meanwhile, the position of the control valve is not limited to the above, and the control valve may be disposed at a high temperature region (e.g., a high temperature region inside or outside the hot box).

Meanwhile, the reformer 200 may further include multiple valves (not shown) connected to the fuel gas inlet 230.

Here, the multiple valves may have an inlet and an outlet and at least one of the inlet and the outlet may be provided in plural number. The multiple valves may have multiple flow paths. Although the plurality of inlets is provided by such multiple valves, there is an advantage that control is facilitated by providing a minimum number of valves.

In the reformer and the fuel cell system having the same according to the present disclosure, the reformer may control the amount of the unreacted fuel gas discharged from the reformer to increase and decrease the reforming amount generated inside the fuel cell stack, thereby controlling the internal temperature of the fuel cell stack. Further, the maximum/minimum operation range of the reformer may be extended, and thus the maximum/minimum operation range of the fuel cell stack may be extended, and finally, the maximum/minimum operation range of the fuel cell system may be extended. Because this method has no additional power consumption compared to the general method which provides excess air for cooling, it is possible to maintain system efficiency at a constant level within the maximum/minimum operating range.

Accordingly, the fuel cell system of the present disclosure may control the temperature of the fuel cell stack to maintain the temperature of the fuel cell stack within the appropriate range, while maintaining the operating state without addition or removal of a separate device.

As describe above, the reformer and the fuel cell system having the same may adjust the amount of the unreacted fuel gas to increase and decrease the reforming amount generated inside the fuel cell stack, thereby controlling the internal temperature of the fuel cell stack using the heat absorption of the reforming reaction.

Thus, the fuel cell system of the present disclosure may control the temperature of the fuel cell stack to maintain the temperature of the fuel cell stack within the appropriate range, while maintaining the operating state without addition or removal of a separate device.

Hereinabove, although the present disclosure has been described with reference to exemplary embodiments and the accompanying drawings, the present disclosure is not limited thereto, but may be variously modified and altered by those skilled in the art to which the present disclosure pertains without departing from the scope of the following claims.

## Claims

1. A fuel cell system, comprising:
a reformer generating a reformed gas from a fuel gas supplied from a fuel supplier by a reforming reaction to discharge a mixed gas of the fuel gas unreacted and the reformed gas, and including a catalyst device including a catalyst used for the reforming reaction; and
a fuel cell stack including an anode receiving the reformed gas generated at the reformer, a cathode receiving oxygen, and a reforming device generating a reformed gas from the unreacted fuel gas of the mixed gas supplied from the reformer by a reforming reaction to be provided to the anode and being installed integrally with or adjacent to the anode;
wherein the reformer controls an amount of the unreacted fuel gas discharged from the reformer to increase and decrease a reforming amount inside the fuel cell stack based on a temperature of the fuel cell stack.

2. A fuel cell system according to claim 1, wherein the reformer varies an amount of the catalyst reacting in the catalyst device to control the amount of the unreacted fuel gas discharged from the reformer.

3. A fuel cell system according to claim 1, wherein the reformer decreases the amount of the catalyst reacting in the catalyst device to increase the amount of the unreacted fuel gas discharged from the reformer for increasing a reforming amount of the reforming device when the temperature of the fuel cell stack is greater than or equal to a first specific temperature, and wherein the reformer increases the amount of the catalyst reacting in the catalyst device to decrease the amount of the unreacted fuel gas discharged from the reformer for decreasing the reforming amount of the reforming device when the temperature of the fuel cell stack is less than or equal to a second specific temperature lower than the first specific temperature.

4. A fuel cell system according to claim 1, wherein the reformer includes:
a reforming main body in which the catalyst device is accommodated;
a fuel gas inlet supplying the fuel gas inside the reforming main body; and
a reformed gas outlet discharging the mixed gas generated inside the reforming main body;
wherein the catalyst device includes a plurality of reforming catalyst regions being arranged along a flow direction of the fuel gas introduced through the fuel gas inlet to communicate with one another;
wherein the fuel gas inlet supplies the fuel gas to one of the reforming catalyst regions to vary the amount of the catalyst reacting in the catalyst device; and
wherein the fuel gas supplied to one of the reforming catalyst regions flows toward the reformed gas outlet.

5. A fuel cell system according to claim 4, wherein the fuel gas inlet includes a plurality of inlets which are disposed corresponding to the reforming catalyst regions, respectively, and selectively supply the fuel gas to each of the reforming catalyst regions.

6. A fuel cell system according to claim 1, wherein the reformer includes:
a reforming main body in which the catalyst device is accommodated;
a fuel gas inlet supplying the fuel gas inside the reforming main body; and
a reformed gas outlet discharging the mixed gas generated inside the reforming main body;
wherein the catalyst device includes a plurality of reforming catalyst regions being arranged along a flow direction of the fuel gas introduced through the fuel gas inlet to communicate with one another; and
wherein the reformed gas outlet discharges the mixed gas from one of the reforming catalyst regions to vary an amount of the catalyst reacting in the catalyst device.

7. A fuel cell system according to claim 6, wherein the reformed gas outlet includes a plurality of outlets which are disposed to correspond to the reforming catalyst regions, respectively, and selectively discharge the mixed gas from each of the reforming catalyst regions.

8. A fuel cell system according to claim 4, wherein the catalyst device includes empty space regions between the plurality of the reforming catalyst regions to mix the fuel gas introduced between the reforming catalyst regions and to control a pressure of the reformed gas generated.

9. A fuel cell system according to claim 4, further comprising:
a control valve disposed on a line supplying the fuel gas to the fuel gas inlet for controlling the supplying of the fuel gas to the fuel gas inlet.

10. A reformer, comprising:
a reforming main body in which a catalyst device is accommodated;
a fuel gas inlet supplying a fuel gas into the reforming main body; and
a reformed gas outlet generating a reformed gas from the supplied fuel gas by a reforming reaction in the reforming main body to discharge a mixed gas of the fuel gas unreacted and the reformed gas;
wherein the catalyst device includes a plurality of reforming catalyst regions arranged along a flow direction of the fuel gas introduced through the fuel gas inlet to communicate with one another;
wherein the fuel gas inlet supplies the fuel gas to one of the reforming catalyst regions for varying an amount of catalyst reacting in the catalyst device; and
wherein the fuel gas supplied to one of the reforming catalyst regions flows toward the reformed gas outlet.
